(19) Europäisches Patentamt / European Patent Office / Office européen des brevets

(11) **EP 4 567 680 A1**

(12) **DEMANDE DE BREVET EUROPEEN**

(43) Date de publication:
**11.06.2025 Bulletin 2025/24**

(21) Numéro de dépôt: **24216025.7**

(22) Date de dépôt: **28.11.2024**

(51) Classification Internationale des Brevets (IPC):
**G06N 3/092** (2023.01) **G06N 20/00** (2019.01)

(52) Classification Coopérative des Brevets (CPC):
**G06N 20/00; G06N 3/045; G06N 3/08; G06N 3/092**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **05.12.2023 FR 2313544**

(71) Demandeur: **Airbus DS SLC**
**78990 Elancourt (FR)**

(72) Inventeurs:
- **Djeachandrane, Abhishek**
  **60800 Crépy-en-Valois (FR)**
- **Delmas, Serge**
  **78690 Saint-Rémy-l'Honoré (FR)**
- **Dubois, Alain**
  **78470 Saint-Rémy lès Chevreuse (FR)**
- **Mellouk, Abdelhamid**
  **91400 Orsay (FR)**

(74) Mandataire: **Cabinet Camus Lebkiri**
**25 rue de Maubeuge**
**75009 Paris (FR)**

(54) **PROCEDE DE SURVEILLANCE D'UN SYSTEME**

(57) Un aspect de l'invention concerne un procédé de surveillance d'un système comprenant :
- recevoir une séquence temporelle de données ;
- déterminer une présence ou une absence d'une anomalie dans ladite séquence temporelle de données, une absence d'une anomalie correspondant à une absence d'un événement particulier survenant dans le système et à une absence d'une irrégularité intrinsèque à la séquence temporelle de données, ladite détermination utilisant un modèle d'apprentissage automatique ;
- si la présence d'une anomalie a été déterminée, générer une information d'identification relative à ladite anomalie ;
- recevoir, via l'interface utilisateur, une information de confirmation relative à la présence ou non d'une anomalie dans la séquence temporelle de données ;
- utiliser ladite information de confirmation et ladite information d'identification pour entraîner le modèle d'apprentissage automatique via un mécanisme d'apprentissage.

FIGURE 4

**Description**

**DOMAINE TECHNIQUE DE L'INVENTION**

Le domaine technique de l'invention est celui de la surveillance d'un système, en particulier la surveillance de la survenue d'un événement particulier dans le système.

L'invention concerne ainsi un procédé et un système d'identification d'un événement dans une séquence temporelle de données représentant une évolution temporelle du système.

**ARRIERE-PLAN TECHNOLOGIQUE DE L'INVENTION**

La détection d'événements particuliers (notamment des événements indésirables) dans des séquences temporelles de données est importante en termes de sécurité et de prévision des risques.

On entend par « séquence temporelle de données » un ensemble de données temporellement ordonnées, chaque donnée de la séquence temporelle étant associée à un instant respectif. En outre, chaque donnée peut être caractérisée par un ou plusieurs attributs spatiaux tels qu'une distance et/ou une direction et/ou une position. Une séquence temporelle de données selon l'invention peut notamment être une séquence vidéo (i.e. une séquence temporelle d'images), par exemple obtenue à l'aide d'un système de vidéo-surveillance, mais l'invention ne se limite pas à de telles données. Les données de la séquence temporelle peuvent aussi être, par exemple, des données issues de capteurs, par exemple un signal électrocardiogramme (ECG), ou une mesure associée à un système tel qu'un moteur ou une aile d'avion, par exemple une mesure de vibration ou de chaleur.

Un « événement » désigne typiquement un comportement anormal du système. Par exemple, lorsque la séquence temporelle de données est un signal vibratoire, l'événement peut correspondre à une vibration anormale dans le système analysé. Selon un autre exemple, lorsque la séquence temporelle de données est un signal physiologique tel qu'un ECG, l'événement peut correspondre à un motif anormal de l'organe visé (dans le cas de l'ECG, l'événement peut être par exemple une arythmie). Dans le cas où le système analysé est un système de vidéo-surveillance, l'événement peut correspondre à une action anormale dans la scène captée par le système de vidéo-surveillance, par exemple une explosion.

Par exemple, l'événement que l'on cherche à détecter peut être un événement parmi un ensemble prédéterminé d'événements. Lorsque la séquence temporelle de données est une séquence vidéo provenant d'un système de vidéo-surveillance, cet ensemble prédéterminé d'événements peut comprendre, par exemple : un acte de vandalisme, une explosion, une émeute, un accident, une personne effectuant une course ou lançant un objet. Il est entendu que cet ensemble d'événements dépend de l'application pour laquelle le système de surveillance est utilisé. Par exemple, selon les applications visées, la présence d'une personne qui court dans la séquence vidéo peut être ou non un événement que l'on cherche à détecter.

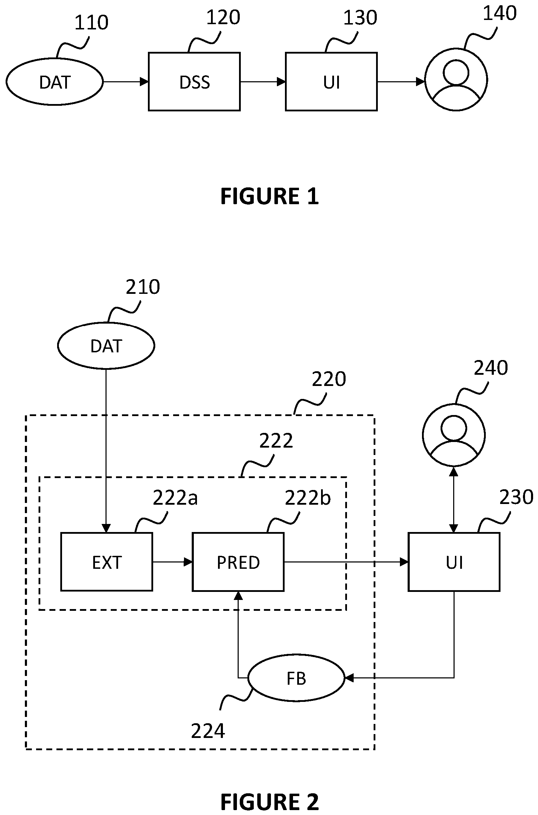

Il existe, dans l'état de la technique, de nombreux systèmes de surveillance visant à détecter des événements dans des séquences temporelles de données. Un exemple d'un tel système est représenté sur la Figure 1, dans le cadre de la vidéo-surveillance.

Le système de vidéo-surveillance de la Figure 1 comprend un système d'aide à la décision 120 (« Decision Support System » en anglais, ou DSS) et une interface utilisateur 130 (« User Interface » en anglais, ou UI). Le système d'aide à la décision 120 est configuré pour recevoir en entrée des séquences vidéo 110 et pour détecter, dans ces séquences vidéo 110, des événements. Par exemple, le système d'aide à la décision 120 peut intégrer un module de détection comprenant un modèle d'apprentissage automatique entraîné pour détecter, dans des séquences vidéo, des événements de manière automatique. Par exemple, un tel modèle d'apprentissage automatique peut être préalablement entraîné par un mécanisme d'apprentissage supervisé (dans lequel les données d'entraînement sont des séquences labellisées, les labels indiquant si un événement est présent ou non dans la séquence ou dans certaines images de la séquence).

Lorsque le système d'aide à la décision 120 détecte un événement, il envoie une alerte à un utilisateur 140 via l'interface utilisateur 130, et l'utilisateur 140 confirme ou infirme la présence de l'événement, par exemple en fournissant à l'interface utilisateur 130 une donnée de confirmation. Il est noté que la confirmation par un utilisateur 140 est importante dans le cas d'applications critiques, pour lesquelles il est important d'une part de renforcer la fiabilité de la détection par la confirmation humaine et d'autre part de s'assurer que la surveillance globale ne soit pas impactée en cas de défaillance du système (typiquement, que l'utilisateur puisse prendre le relai temporairement si le système est indisponible, pour éviter autant que possible de ne pas détecter un événement pendant l'indisponibilité du serveur).

Les systèmes d'aide à la décision existants sont performants en termes de détection d'événements particuliers, mais ils nécessitent généralement d'être configurés manuellement en fonction de l'application visée, notamment en ce qui concerne l'ensemble d'événements que l'on cherche à détecter, ce qui est chronophage et source d'erreurs. En outre, de tels systèmes sont très fortement impactés dès lors qu'une détérioration intervient sur les données elles-mêmes. Par exemple, dans le cas d'images très bruitées, le système d'aide à la décision peut ne pas détecter un événement du fait de la présence de bruit, et l'utilisateur n'est pas averti de la situation, ce qui fait qu'il n'est pas sollicité pour prendre le relai sur l'analyse de la séquence vidéo. Dans un tel cas de figure, l'événement ne peut pas être détecté en dernier recours par l'utilisateur.

L'invention vient améliorer la situation.

## RESUME DE L'INVENTION

L'invention offre une solution aux problèmes évoqués précédemment, en tant avantageusement compte non seulement de la qualité de l'identification d'un événement, mais aussi de la qualité de la séquence de données elle-même - la qualité de la séquence de données ayant un impact sur la qualité de la détection. Les faux négatifs liés à une dégradation des données sont ainsi largement évités par rapport aux méthodes de l'état de la technique.

Un aspect de l'invention concerne ainsi un procédé de surveillance d'un système mis en oeuvre par ordinateur comprenant :

- recevoir une séquence temporelle de données représentative d'une évolution temporelle du système ;

- déterminer une présence ou une absence d'une anomalie dans ladite séquence temporelle de données, une absence d'une anomalie correspondant à une absence d'un événement particulier survenant dans le système et à une absence d'une irrégularité intrinsèque à la séquence temporelle de données, ladite détermination utilisant un modèle d'apprentissage automatique entraîné pour identifier une anomalie dans une séquence temporelle de données ;

- si la présence d'une anomalie a été déterminée, générer une information d'identification relative à ladite anomalie ;

- envoyer à une interface utilisateur ladite séquence temporelle de données et, si la présence d'une anomalie a été détectée, ladite information d'identification relative à ladite anomalie ;

- consécutivement audit envoi, recevoir, via l'interface utilisateur, une information de confirmation relative à la présence ou non d'une anomalie dans la séquence temporelle de données ;

- utiliser ladite information de confirmation et, si la présence d'une anomalie a été déterminée, l'information d'identification, pour entraîner le modèle d'apprentissage automatique via un mécanisme d'apprentissage.

Par « système », il est entendu tout ensemble que l'on cherche à surveiller. Dans le cas de la vidéosurveillance, le système peut être une scène à surveiller, filmée par une ou plusieurs caméras. Le système peut aussi être le système cardiaque d'un sujet (surveillance des signaux cardiaques), un appareil électrique, un moteur, etc.

Par « séquence temporelle de données représentative d'une évolution temporelle du système », il est entendu une séquence temporelle de données, lesdites données étant relatives au fonctionnement ou à l'état du système. Dans le cas de la vidéosurveillance, cette séquence temporelle de données peut être une ou plusieurs séquences vidéo de la scène à surveiller.

Par « anomalie », il est entendu toute situation anormale relative au système analysé ou à la séquence de données. On distingue deux types d'anomalies : les « événements » et les « anomalies intrinsèques à la séquence de données ».

Par « événement », il est entendu un comportement particulier dans le système analysé, que l'on cherche à détecter. La définition d'un événement doit généralement être effectuée en amont (définir ce que le système est censé détecter, selon l'application visée). Comme décrit plus loin, dans la présente invention, l'événement peut avantageusement être défini pendant l'analyse des données. Cela évite à l'utilisateur de passer du temps à définir les événements, évite des erreurs potentielles, et permet de s'adapter aux évolutions des besoins de l'utilisateur (ce qui est ou n'est pas un événement peut ainsi être facilement modifié, de manière transparente pour l'utilisateur).

Par « irrégularité intrinsèque à la séquence temporelle de données », il est entendu une irrégularité dans la séquence de données elle-même. Une irrégularité intrinsèque est distincte de l'événement, mais elle peut influencer la détection de l'événement.

Les irrégularités intrinsèques sont principalement de deux types :

- les irrégularités intrinsèques liées à la qualité de la séquence temporelle de données reçue ; et

- les irrégularités intrinsèques liées à l'intégrité de la séquence temporelle de données reçue.

Les irrégularités intrinsèques liées à la qualité de la séquence temporelle de données reçue sont des irrégularités qui concernent la donnée mais pas son contenu, par exemple des données bruitées. Bien entendu, le contenu est rendu moins accessible du fait de la présence du bruit, mais le contenu est conforme à la réalité.

Les irrégularités intrinsèques liées à l'intégrité de la séquence temporelle de données reçue sont des irrégularités qui concernent le contenu lui-même, qui a été modifié. C'est le cas par exemple lors d'une cyber-attaque, lorsqu'une séquence de données qui provient d'un autre système (ou du même système, mais à un moment différent) remplace la « vraie » séquence de données, ou lors d'une obstruction volontaire de la scène (dans le cas de la vidéosurveillance, lorsqu'un objet est volontairement placé dans le champ pour masquer une zone d'intérêt, dans lequel un événement se produit sans qu'on puisse le détecter).

L'invention tient ainsi avantageusement compte de plusieurs facteurs, qui ne sont jamais considérés ensemble dans les systèmes de l'art antérieur :

- la qualité de la détection de l'événement - appelée « qualité de prédiction » (ou « quality of prédiction » en anglais), QoP. Il s'agit de la capacité du modèle d'apprentissage automatique à détecter un événement dans la séquence de données. Cette QoP est généralement utilisée seule dans les méthodes de détection basée sur de l'apprentissage automatique ;

- la « qualité d'expérience » (ou « quality of expérience » en anglais) QoE, qui représente la qualité de la donnée elle-même. Cette composante est généralement utilisée dans la communauté des réseaux de télécommunications, pour évaluer la qualité du réseau. Dans les méthodes de l'art antérieur, elle n'est pas jamais couplée à la QoP (car ces deux composantes ne sont pas utilisées dans le même domaine).

Dans la présente invention, ce n'est pas une QoE « standard » qui est utilisée, mais une QoE dite « spécifique », car elle tient compte non seulement des irrégularités liées à la qualité de la donnée (qui est la QoE standard, liée à la qualité du réseau), mais aussi des irrégularités liées à l'intégrité de la donnée (appelée ici QoE « augmentée »). Ainsi, la QoE augmentée prend en compte toutes les irrégularités qui pourraient avoir une influence sur la détection de l'événement.

Par « information d'identification », il est entendu une donnée indiquant qu'une anomalie a été identifiée dans la séquence de données par le modèle d'apprentissage automatique. Cette donnée peut être par exemple un indicateur binaire égal à 1 si une anomalie a été identifiée (sans distinction entre événement et irrégularité intrinsèque). Dans d'autres modes de réalisation, cette donnée peut être un couple de valeurs binaires, dont l'une vaut 1 si un événement a été détecté et l'autre vaut 1 si une irrégularité intrinsèque a été détectée.

Par « information de confirmation » il est entendu une donnée indiquant si l'utilisateur identifie ou non une anomalie dans la séquence de données.

Dans un ou plusieurs modes de réalisation, le mécanisme d'apprentissage comprend un mécanisme d'apprentissage par renforcement, dans lequel une récompense associée au mécanisme d'apprentissage par renforcement est fonction de l'information de confirmation et, si la présence d'une anomalie a été déterminée, de l'information d'identification.

Dans un ou plusieurs modes de réalisation, lequel l'information d'identification relative à ladite anomalie comprend une donnée temporelle ou une donnée spatiale dans la séquence temporelle de données.

Par « donnée temporelle », il est entendu une donnée permettant de localiser dans le temps l'anomalie. Par « donnée spatiale », il est entendu une donnée permettant de localiser l'anomalie dans l'espace. Par exemple, dans le cas de la vidéosurveillance, la donnée temporelle peut correspondre à un ou plusieurs indices temporels associés aux images concernées par l'anomalie, et la donnée spatiale peut correspondre aux pixels des images concernés par l'anomalie.

Dans un ou plusieurs modes de réalisation, l'événement particulier appartient à un ensemble d'événements, ledit ensemble d'événements étant déterminé par le mécanisme d'apprentissage.

En d'autres termes, dans ces modes de réalisation, les événements qu'on cherche à détecter ne sont pas prédéfinis par l'utilisateur, ils sont déterminés par le procédé lui-même.

Dans un ou plusieurs modes de réalisation, l'envoi à l'interface utilisateur de ladite séquence temporelle de données est mis en oeuvre uniquement si la présence d'une anomalie a été déterminée.

Dans ces modes de réalisation, l'utilisateur n'est sollicité que lorsqu'une anomalie a été détectée. C'est donc la détection, par le modèle d'apprentissage, d'une anomalie qui déclenche une action de la part de l'utilisateur.

Dans un ou plusieurs modes de réalisation, l'information de confirmation est une donnée binaire indiquant si une anomalie est présente ou non dans la séquence temporelle de données.

Dans ces modes de réalisation, l'information d'identification peut également être une donnée binaire indiquant si une anomalie est présente ou non dans la séquence temporelle de données.

Dans ces modes de réalisation, il n'y a donc pas de distinction entre un événement et une irrégularité intrinsèque.

Alternativement, l'information d'identification et l'information de confirmation sont des couples de données binaires, dans lequel une variable du couple concerne la présence ou non d'un événement et l'autre variable du couple concerne la présence ou non d'une irrégularité intrinsèque dans la séquence temporelle de données. Dans ces modes de réalisation, il y a donc une distinction entre un événement et une irrégularité intrinsèque.

Dans ces modes de réalisation alternatifs, une identification d'une anomalie dans une séquence temporelle de données par le modèle d'apprentissage automatique comprend :

- identifier si un événement particulier survenant dans le système est présent ou non dans la séquence temporelle de données ; et

- identifier si une irrégularité intrinsèque à la séquence temporelle de données est présente ou non dans la séquence temporelle de données ;

dans lequel l'information d'identification relative à ladite anomalie comprend :

- une donnée relative à une identification d'une présence ou non d'un événement particulier dans la séquence temporelle de données ; et

- une donnée relative à une identification d'une présence ou non d'une irrégularité intrinsèque à la séquence temporelle de données ;

et dans lequel l'information de confirmation comprend :

- une donnée relative à une présence ou une absence d'un événement particulier dans la séquence temporelle de données ; et

- une donnée relative à une présence ou une absence d'une irrégularité intrinsèque à la séquence temporelle de données.

Dans un ou plusieurs modes de réalisation, l'information de confirmation comprend en outre une donnée comportementale d'un utilisateur.

Par « donnée comportementale », il est entendu une donnée relative à un comportement d'un utilisateur en train d'utiliser le procédé de surveillance. Par exemple, la donnée peut concerner un agacement ou un mécontentement de l'utilisateur (via l'utilisation d'une caméra, d'un micro, d'un capteur de pression sur un périphérique d'entrée tel qu'un écran tactile, une souris ou un clavier, etc.).

Dans un ou plusieurs modes de réalisation, le système est une scène et dans lequel la séquence temporelle de données comprend au moins une séquence temporelle d'images d'au moins une partie de la scène. Ces modes de réalisation correspondent ainsi à des applications de l'invention au domaine de la vidéosurveillance.

Un autre aspect de l'invention concerne un dispositif de surveillance d'un système comprenant :

- une interface d'entrée configurée pour recevoir une séquence temporelle de données représentative d'une évolution temporelle du système ;

- un circuit de calcul configuré pour :

  déterminer une présence ou une absence d'une anomalie dans ladite séquence temporelle de données, une absence d'une anomalie correspondant à une absence d'un événement particulier survenant dans le système et à une absence d'une irrégularité intrinsèque à la séquence temporelle de données, ladite détermination utilisant un modèle d'apprentissage automatique entraîné pour identifier une anomalie dans une séquence temporelle de données ;

  si la présence d'une anomalie a été déterminée, générer une information d'identification relative à ladite anomalie ;

- une interface de communication configurée pour :

  envoyer à une interface utilisateur ladite séquence temporelle de données et, si la présence d'une anomalie a été détectée, ladite information d'identification relative à ladite anomalie ;

  consécutivement audit envoi, recevoir, via l'interface utilisateur, une information de confirmation relative à la présence ou non d'une anomalie dans la séquence temporelle de données ;

dans lequel le circuit de calcul est en outre configuré pour utiliser ladite information de confirmation et, si la présence d'une anomalie a été déterminée, l'information d'identification, pour entraîner le modèle d'apprentissage automatique via un mécanisme d'apprentissage.

Un programme informatique, mettant en oeuvre tout ou partie du procédé décrit ci-avant, installé sur un équipement préexistant, est en lui-même avantageux.

Ainsi, la présente invention vise également un programme informatique comportant des instructions pour la mise en oeuvre du procédé précédemment décrit, lorsque ce programme est exécuté par un processeur.

Ce programme peut utiliser n'importe quel langage de programmation (par exemple, un langage-objet ou autre), et être sous la forme d'un code source interprétable, d'un code partiellement compilé ou d'un code totalement compilé.

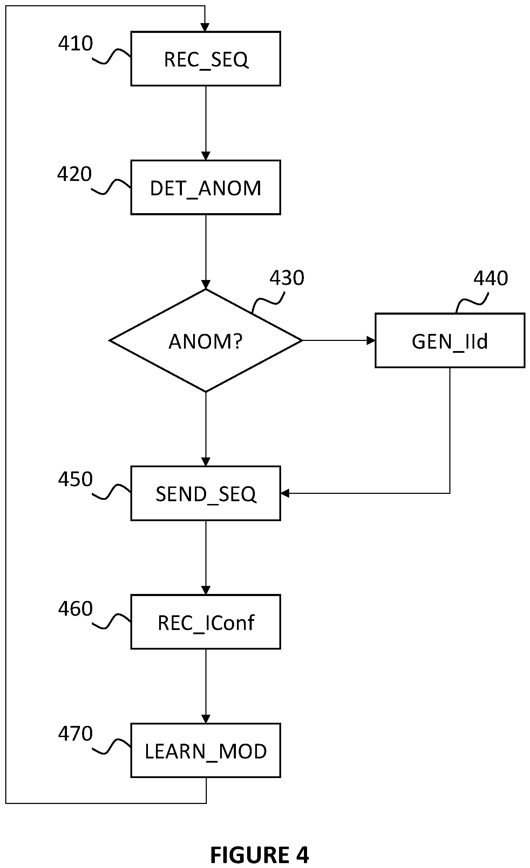

La Figure 4 décrite en détail ci-après peut former l'organigramme de l'algorithme général d'un tel programme informatique.

L'invention et ses différentes applications seront mieux comprises à la lecture de la description qui suit et à l'examen des figures qui l'accompagnent.

## BREVE DESCRIPTION DES FIGURES

D'autres caractéristiques et avantages de l'invention apparaîtront à la lecture de la description, qui peut être lue en regard des figures. Ces figures sont présentées à titre indicatif et ne sont nullement limitatives.

La Figure 1 représente un système de surveillance de l'état de la technique.

La Figure 2 représente un exemple d'un système de surveillance selon un premier mode de réalisation de l'invention.

La Figure 3 représente un exemple d'un système de surveillance selon un premier mode de réalisation de l'invention.

La Figure 4 représente un procédé de surveillance selon un ou plusieurs modes de réalisation de l'invention.

La Figure 5 représente un exemple d'un dispositif de surveillance selon un ou plusieurs modes de réalisation de l'invention.

## DESCRIPTION DETAILLEE

La Figure 2 représente un exemple d'un système de surveillance selon un premier mode de réalisation de l'invention.

Le système de surveillance de la Figure 2 permet de surveiller un environnement, aussi appelé « système » ou « système analysé » (pour le distinguer du « système » de surveillance). Par exemple, dans le cadre d'un système de vidéo-surveillance, le système analysé est typiquement une scène, et les séquences temporelles de données reçues sont des séquences d'images représentant au moins une partie de cette scène. Dans le cadre de la surveillance du rythme cardiaque d'un sujet, le système analysé est le coeur du sujet et les séquences temporelles de données sont par exemple des données ECG du sujet. Dans le cadre de la surveillance de la vibration d'un moteur, le système étudié peut être par exemple le moteur et les séquences temporelles de données peuvent être par exemple des signaux vibratoires captés par des capteurs de vibration situés dans le moteur.

Le système de surveillance de la Figure 2 comprend un système d'aide à la décision 220 et une interface utilisateur 230. Le système d'aide à la décision 220 est configuré pour recevoir en entrée des séquences temporelles de données 210 et pour identifier, dans ces séquences temporelles de données 210, des anomalies.

On entend par « anomalie » dans une séquence temporelle de données n'importe quelle situation anormale relative à la séquence temporelle de données. Une anomalie peut correspondre à un événement particulier détectable dans la séquence temporelle de données - que l'on peut qualifier d'extrinsèque à la séquence de données elle-même, ou à une irrégularité intrinsèque à la séquence temporelle de données.

Comme mentionné plus haut, un « événement » désigne un comportement particulier dans le système analysé. Il s'agit donc d'un événement « anormal » ou « particulier » que l'on souhaite détecter. Dans les systèmes de surveillance de l'état de la technique, l'ensemble des événements que le système d'aide à la décision doit considérer comme anormaux (et donc doit détecter) doit être défini lors d'une étape de pré-configuration du système d'aide à la décision.

Dans le cadre de la présente invention, il est noté que l'ensemble des événements anormaux peut être également défini pendant une étape de pré-configuration du système d'aide à la décision 220, mais il peut aussi être mis à jour, voire complètement défini lors de l'utilisation du système, comme décrit ci-après.

Une irrégularité intrinsèque à la séquence temporelle de données peut correspondre, par exemple, à une dégradation des données reçues. Une telle dégradation peut être, par exemple, une présence de bruit excessif dans les données (qui peut être due à divers facteurs, tels que des facteurs environnementaux - par exemple la présence de brouillard ou de pluie, des facteurs contextuels - par exemple la présence de fumée consécutive à une explosion, des facteurs liés au réseau de télécommunications par lequel les données sont récupérées - par exemple une bande passante insuffisante, etc.), un piratage des données (par exemple l'insertion, dans la séquence de données initiale, d'une séquence de « fausses » données issues par exemple d'un autre système de surveillance) ou une compromission des données (par exemple, une occlusion volontaire dans la scène pour masquer la présence d'un événement - typiquement un camion qui cache la portion de la scène où se déroule une agression). De manière générale, une irrégularité intrinsèque à la séquence temporelle de données correspond à une irrégularité susceptible de dégrader l'identification d'un événement dans la séquence temporelle de données.

De manière générale, une irrégularité intrinsèque à la séquence temporelle de données correspond donc à une irrégularité dans les données qui n'est pas l'événement en lui-même, mais qui est susceptible de détériorer la qualité de l'identification de l'événement.

Comme mentionné ci-dessus, le système d'aide à la décision 220 est donc configuré pour identifier au moins une anomalie dans une séquence temporelle de données 210 reçue.

On entend ici par « identifier une anomalie » le fait d'identifier une présence ou une absence d'une anomalie dans la séquence temporelle de données, et éventuellement de caractériser l'anomalie détectée.

Dans le cadre de la présente invention, il est entendu qu'une anomalie est présente dans la séquence de données lorsqu'un événement particularité ou une irrégularité intrinsèque à la séquence de données est présente. A l'inverse, une anomalie est absente de la séquence de données lorsque la séquence de données ne comprend ni événement, ni irrégularité. En d'autres termes, une absence d'anomalie correspond à une absence d'événement particulier dans la séquence de données et une absence d'irrégularité intrinsèque à la séquence de données. Il est noté que cette approche diffère sensiblement des systèmes de surveillance existants, pour lesquels l'anomalie correspond uniquement à un événement particulier.

L'identification d'une anomalie peut comprendre un indicateur (par exemple binaire) d'une présence ou d'absence de l'anomalie, et/ou une localisation temporelle et/ou spatiale de l'anomalie.

Une localisation temporelle d'une anomalie comprend par exemple une ou plusieurs données relatives à un ou plusieurs instants pendant lesquels l'anomalie est présente dans la séquence temporelle de données (par exemple, un instant de début d'événement et/ou un instant de fin d'événement, une durée de l'irrégularité, etc.). Par exemple, dans une séquence vidéo d'une durée d'une minute capturée par un système de vidéo-surveillance, un événement particulier peut être détecté à la 3$^{ème}$ seconde de la vidéo, ou un bruit excessif des données peut être présent entre la 3$^{ème}$ seconde et la 20$^{ème}$ seconde de la séquence vidéo.

Une localisation spatiale d'une anomalie comprend par exemple une ou plusieurs données relatives à un ou plusieurs emplacements de l'anomalie dans la séquence temporelle de données. Par exemple, dans une vidéo capturée par un système de vidéo-surveillance multi-caméras, un événement peut être détecté sur la vidéo provenant d'une seule des caméras du système de vidéo-surveillance, et la localisation spatiale de l'anomalie peut comprendre par exemple l'identification de la caméra ainsi que des données relatives à une position de l'événement dans une ou plusieurs images de la séquence vidéo (par exemple, des positions successives d'une personne en train de courir).

Le système d'aide à la décision 220 comprend typiquement un module de détection 222 utilisant au moins un modèle d'apprentissage automatique préalablement entraîné pour identifier, dans une séquence temporelle de données, une anomalie. Par exemple, un tel modèle d'apprentissage automatique peut être préalablement entraîné par un mécanisme d'apprentissage supervisé ou par un mécanisme d'apprentissage par renforcement.

Par exemple, le module de détection 222 peut comprendre un premier module 222a incluant un premier modèle d'apprentissage automatique entraîné pour extraire, dans une séquence temporelle de données, des motifs spatio-temporels. Par exemple, le premier modèle d'apprentissage peut être un réseau de neurones préalablement entraîné sur une base de données comprenant des séquences temporelles de données annotées. Le module de détection 222 peut en outre comprendre un deuxième module 222b configuré pour identifier, à partir des motifs spatio-temporels extraits par le premier module 222a, une ou plusieurs anomalies dans la séquence temporelle de données. Le deuxième module 222b peut inclure un deuxième modèle d'apprentissage destiné à être entraîné sur des données de prédiction (i.e. sur les séquences temporelles reçues pendant le procédé de surveillance selon l'invention, par opposition à des données « d'apprentissage » utilisées préalablement au procédé de surveillance, notamment pour entraîner le premier modèle du premier module 222a).

Il est noté que le système d'aide à la décision peut aussi recevoir des données autres que la séquence temporelle de données, et utiliser ces données autres pour identifier la présence d'une anomalie - en particulier la présence d'une irrégularité. Par exemple, ces données autres peuvent comprendre des données informatives relatives au réseau par lequel la séquence temporelle de données est obtenue, notamment des données sur la stabilité du réseau. Les données autres peuvent aussi être des données indiquant qu'une cyber attaque a eu lieu, etc.

Lorsque le système d'aide à la décision 220 identifie la présence d'une anomalie, il génère une information d'identification relative à ladite anomalie identifiée. Dans le premier mode de réalisation de la Figure 2, l'information d'identification comprend une donnée binaire indiquant la présence ou l'absence d'une anomalie dans la séquence de données, par exemple : 0 si aucune anomalie n'a été identifiée, 1 si une anomalie a été identifiée (quelle que soit la nature de l'anomalie : événement particulier ou irrégularité intrinsèque aux données). Dans d'autres modes de réalisation, notamment le deuxième mode de réalisation décrit en détail ci-après en référence à la Figure 4, l'information d'identification peut différencier l'anomalie identifiée selon sa nature : événement particulier ou irrégularité.

En outre, l'information d'identification peut comprendre d'autres données, notamment des données de localisation temporelles et/ou spatiales telles que définies ci-dessus.

Dans le premier mode de réalisation représenté sur la Figure 2, le système d'aide à la décision 220 est configuré pour envoyer la séquence temporelle de données 210 vers une interface utilisateur 230 - que le module de détection 222 ait identifié une anomalie ou non. Lorsqu'une anomalie a été détectée, l'information d'identification relative à cette anomalie est en outre envoyée à l'interface utilisateur 230.

L'interface utilisateur peut comprendre un écran pour afficher des données, par exemple la séquence temporelle de données dans le cas d'un système de vidéo-surveillance, ou d'un système de surveillance d'un signal vibratoire ou ECG - dans ces derniers cas, la courbe de variation du signal dans le temps peut être affichée sur l'écran. Une alerte relative à l'éventuelle information d'identification peut également être affichée, par exemple sous la forme d'un message incluant des données descriptives et/ou des données spatio-temporelles relatives à l'anomalie, et/ou sous la forme par exemple d'un cadre superposé aux données pour indiquer à l'utilisateur où se situe l'anomalie identifiée. L'interface utilisateur peut bien entendu comprendre d'autres composants, par exemple un haut-parleur pour « jouer » un contenu associé à la séquence temporelle de données (par exemple le signal en lui-même si le signal est un signal audio, ou la partie audio du signal si le signal est un signal vidéo) et/ou à l'information d'identification relative à une anomalie (par exemple une alerte sonore). L'interface utilisateur comprend également tout moyen pour recevoir des données de l'utilisateur, par exemple une souris, un clavier, un écran tactile, etc.

L'utilisateur 240 a donc accès au contenu de la séquence temporelle de données, qu'il peut analyser en temps réel. Il est noté que même lorsqu'aucune anomalie n'a été détectée, l'utilisateur a la possibilité d'analyser ce contenu, et d'identifier une anomalie dans ce contenu. Lorsqu'une anomalie a été détectée, l'utilisateur 240 reçoit également l'information d'identification et peut confirmer ou infirmer qu'il s'agit d'une anomalie.

L'utilisateur 240 peut ainsi transmettre au système d'aide à la décision 220 une information, appelée information de confirmation, via l'interface utilisateur 230. Cette information de confirmation est une information relative à la présence ou l'absence d'une anomalie dans la séquence de données. Il est noté qu'une telle donnée de confirmation n'est pas forcément générée en réponse à l'envoi d'une information d'identification relative à une anomalie par le système d'aide à la décision 220 vers l'interface utilisateur. Elle peut être générée alors que le système d'aide à la décision 220 n'a pas identifié d'anomalie dans la séquence de données, mais que l'utilisateur 240 identifie malgré tout la présence d'une anomalie (faux négatif), ou que l'utilisateur confirme l'absence d'anomalie dans la séquence de données (vrai négatif). Lorsque le système d'aide à la détection 220 a identifié une anomalie, la donnée de confirmation permet de confirmer qu'il s'agit bien d'une anomalie (vrai positif) ou au contraire d'indiquer qu'il n'y a pas d'anomalie (faux positif).

Par exemple, l'information de confirmation peut valoir 1 si une anomalie est effectivement présente (selon la « vérité terrain » reçue via l'interface utilisateur 230), et 0 sinon, indépendamment de la valeur de l'information d'identification.

Il est noté que l'information de confirmation n'est pas nécessairement fournie par l'utilisateur 240 à l'interface utilisateur 230. Elle peut être générée de manière indirecte, par exemple à l'aide d'une caméra analysant les expressions faciales de l'utilisateur 240 et/ou à l'aide d'un microphone analysant des sons émis par l'utilisateur 240. Il est entendu que les différentes manières pour obtenir, via l'interface utilisateur 230, l'information de confirmation ne sont pas exclusives les unes des autres et peuvent être combinées.

Une donnée 224 dérivée de l'information de confirmation est ensuite envoyée au système d'aide à la détection 220 - et en particulier au module de détection 222, pour être utilisée pour entraîner au moins un modèle d'apprentissage du module de détection 222. Par exemple, dans le cas où le module de détection 222 comprend un premier module 222a et un deuxième module 222b comme décrit ci-avant, la donnée dérivée 224 peut être utilisée pour entraîner le modèle d'apprentissage automatique du deuxième module 222b.

Par exemple, le modèle d'apprentissage automatique du deuxième module 222b peut être entraîné via un mécanisme d'apprentissage par renforcement (dans lequel le modèle apprend à détection d'événement à partir de récompenses - positives ou négatives - attribuées à des décisions successives). La donnée dérivée 224 peut être par exemple une récompense à fournir au modèle d'apprentissage automatique du deuxième module 222b, qui vaut par exemple 1 si l'information d'identification et l'information de confirmation sont identiques, et 0 sinon. Lors de l'apprentissage par renforcement, le module 222b compare donc cette récompense binaire à la prédiction qu'il avait effectuée, qui peut elle aussi être binaire, et valoir 1 si le module avait détecté une anomalie et 0 sinon.

Ainsi, le module de détection 222 continue d'apprendre pendant la phase d'utilisation du système (par opposition à la phase préalable d'apprentissage du modèle sur des données d'entraînement).

Cela permet notamment de pouvoir, partiellement ou en totalité, s'affranchir d'une pré-configuration du système d'aide à la décision 220, par exemple pour définir ce qu'est une anomalie dans le contexte de l'application souhaitée par l'utilisateur (cette définition pouvant être très différente selon les applications - par exemple, une personne en train de courir peut être un événement d'intérêt pour certaines applications mais pas pour d'autres). Ainsi, la configuration du système de surveillance est affinée voire complètement effectuée pendant la phase d'utilisation du système, de manière quasi-transparente pour l'utilisateur. Cela permet de gagner du temps de pré-configuration et d'éviter des erreurs de pré-configuration, de s'adapter à une éventuelle évolution des besoins de l'utilisateur et/ou de mieux d'adapter aux besoins de l'utilisateur (même si ceux-ci n'ont pas évolué).

En outre, il est noté que, selon l'invention, l'identification ne se limite pas à une identification d'un événement, mais s'étend à toute anomalie - notamment une irrégularité - qui pourrait influencer la détection d'un événement.

Telle qu'elle est définie ci-dessus, la donnée dérivée 224 permet avantageusement de tenir compte à la fois de paramètres liés à la qualité et aux performances du module de détection 222 lui-même (en d'autres termes, des paramètres liés à l'architecture du modèle d'apprentissage) - appelés « paramètres endogènes », mais aussi de paramètres qui ne sont pas liés directement à l'architecture du module de détection, mais qui proviennent de phénomènes extérieurs - appelés « paramètres exogènes ». Pour résumer, les paramètres endogènes sont liés aux événements, et les paramètres exogènes sont liés aux irrégularités intrinsèques aux données (liées soit à la qualité de la donnée, soit à l'intégrité de la donnée).

Les paramètres endogènes comprennent notamment, dans le cas d'une architecture de type réseau de neurones, les poids associés aux différents noeuds. Les paramètres endogènes sont ceux qui sont liés directement à la détection d'un événement d'intérêt. Dans les algorithmes existants d'apprentissage automatique, seuls ces paramètres sont pris en compte pour entraîner et/ou améliorer le modèle.

Les paramètres exogènes peuvent être de multiples natures. Ils peuvent par exemple être liés au réseau par lequel les séquences de données sont reçues. En effet, une baisse de la bande passante peut entraîner une baisse de la qualité d'image, une augmentation du bruit, une perte de paquets, etc., qui impactent fortement les données et sont susceptibles de détériorer, voire empêcher la détection d'événements dans ces données. Ils peuvent aussi être liés à des facteurs environnementaux, par exemple une température ou des données météorologiques. Dans le contexte de la vidéo-surveillance par exemple, une pluie battante ou un brouillard épais peut fortement dégrader les images. Ils peuvent aussi être liés à une intervention ayant pour but de détériorer la qualité de la détection (par exemple, occlusion d'une partie de la scène par un camion dans le but de masquer l'événement, piratage des données par insertion de données corrompues ou issues d'une séquence de données sans événement, etc.).

Dans le domaine de la surveillance, de tels paramètres exogènes sont très importants, car ils influencent les paramètres endogènes. Dans le cas de la vidéo-surveillance par exemple, si un camion vient masquer une partie de la scène, le module de détection n'est pas en mesure de déterminer un événement se produisant dans la partie masquée. Toutefois, l'utilisateur doit être alerté d'un tel masquage pour prendre des mesures adaptées (changement d'angle de vue ou de caméra, vérification des lieux, etc.).

L'invention intègre avantageusement ces paramètres exogènes (en plus des paramètres endogènes) pour améliorer la qualité globale du système de surveillance.

Il est noté que les paramètres endogènes peuvent généralement être contrôlés (en modifiant les poids du réseau de neurones par exemple), alors que les paramètres exogènes sont, par nature, non contrôlables.

Pour cela, le système proposé dans la présente invention utilise avantageusement la donnée dérivée 224, qui intègre à la fois la qualité de la prédiction effectuée (est-ce que le système a bien détecté un événement ?), mais aussi la qualité d'expérience de l'utilisateur (est-ce que le système a identifié que la qualité des données était détériorée ?).

Ainsi, si $t$ désigne un indice temporel (par exemple un temps associé à un échantillon de signal ou à une image, ou un laps de temps associé à plusieurs échantillons de signal ou à plusieurs images), si $a_t$ désigne une décision prise par le module de décision 220 pour l'indice temporel $t$ et si $s_t$ désigne l'état réel (vérité terrain : présence ou non d'une anomalie selon l'utilisateur) pour l'indice temporel t, la donnée dérivée 224 est fonction à la fois d'une variable $X_1(s_t, a_t)$ et d'une variable $X_2(s_t)$. Cela signifie que la donnée dérivée intègre non seulement la variable $X_1(s_t, a_t)$ qui compare une prédiction à une « vérité terrain », mais aussi la variable $X_2(s_t)$ qui reflète une qualité d'expérience de l'utilisateur.

Par exemple, la récompense associée au modèle d'apprentissage par renforcement 222b peut être égale à la donnée dérivée 224, qui peut être la somme de $X_1(s_t, a_t)$ et $X_2(s_t)$ :

$$R(s_t, a_t) = X_1(s_t, a_t) + X_2(s_t).$$

La variable $X_1(s_t, a_t)$ est associée à la « Qualité de prédiction » QoP, qui compare la prédiction réalisée par le modèle entraîné à la vérité terrain (i.e. la validation de l'utilisateur). La variable $X_2(s_t)$ est associée à la « Qualité d'expérience » QoE, qui comprend dans la présente invention deux composantes : une composante « standard », qui est due notamment à la qualité du réseau, et une composante « augmentée », qui tient compte de toutes les autres irrégularités qui peuvent avoir un impact sur la QoP. Par exemple, cette composante augmentée reflète l'intégrité de la donnée (corruption des données reçues, obstruction volontaire d'une partie de la scène dans le cas de la vidéosurveillance, etc.).

Les paramètres endogènes sont ceux qui ne sont pas liés directement à l'événement, mais qui peuvent avoir un impact sur l'identification d'un événement. Dans le cadre de la présente invention, ils sont représentés par la présente d'une irrégularité dans la séquence temporelle de données.

Une irrégularité au sens de l'invention peut donc être vue comme une anomalie de perception du contenu de la séquence de données, tandis qu'un événement peut être vu comme une anomalie du contenu analysé.

Une telle irrégularité peut être, à titre d'exemple et de manière non limitative :

- une irrégularité due à un phénomène non volontaire : présence de bruit, interruption du réseau à cause par exemple d'une section des câbles lors de travaux ou due à une intervention sur le réseau, instabilité du réseau (diminution de bande passante, congestion, ...), phénomènes météorologiques (orage, pluie, brouillard, ...), catastrophes naturelles, etc. ; ou

- une irrégularité due à un phénomène volontaire (provoquée volontairement par un tiers) : cyber attaque (qui peut entraîner un changement de flux, une compromission des données, un ajout de bruit, etc.), occlusion volontaire dans la scène (dans le cas de la vidéo-surveillance), apparition d'un son pour masquer le contenu d'une donnée sonore, etc.

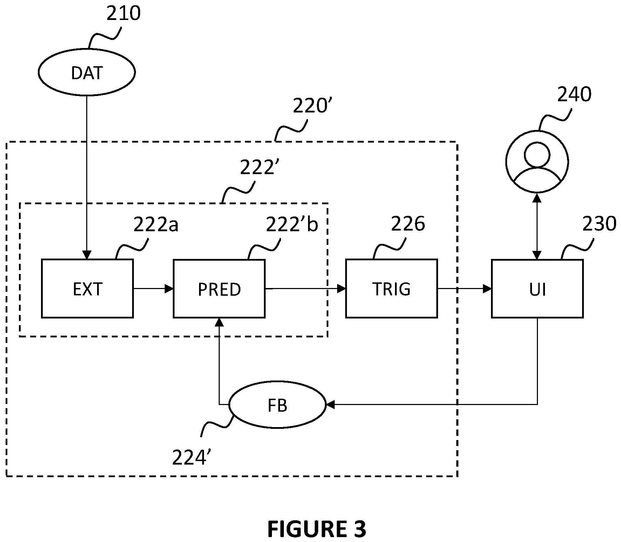

La Figure 3 représente un exemple d'un système de surveillance selon un deuxième mode de réalisation de l'invention.

Sur les Figures 2 et 3, les éléments ayant les mêmes références numériques sont similaires. Ainsi, la description des éléments 210, 230 et 240 ci-dessus reste valable.

Dans ce deuxième mode de réalisation, une distinction est réalisée entre l'identification d'un événement et l'identification d'une irrégularité. Plus précisément, les informations ne sont plus binaires comme dans le premier mode de réalisation, mais comprennent deux données, l'une relative à l'identification d'un événement dans la séquence temporelle de données et l'autre à l'identification d'une irrégularité dans la séquence temporelle de données.

Ainsi, le module de détection 220' de la Figure 3 peut être configuré pour identifier d'une part la présence ou l'absence d'un événement dans la séquence de données, et d'autre part la présence ou l'absence d'une irrégularité dans la séquence temporelle de données. Dans ce mode de réalisation, l'information d'identification peut donc inclure deux données : une donnée relative à la présence ou l'absence d'un événement dans la séquence de données et une donnée relative à la présence ou l'absence d'une irrégularité dans la séquence de données.

Par exemple, une telle information d'identification peut être : [0, 0] si aucun événement n'est identifié et aucune irrégularité n'est identifiée ; [0, 1] si aucun événement n'est identifié mais si une irrégularité est identifiée ; [1, 0] si un événement est identifié mais aucune irrégularité n'est identifiée ; et [1, 1] si un événement est identifié et une irrégularité est identifiée.

De manière similaire, l'information de confirmation intègre elle aussi deux données : une donnée relative à la présence ou l'absence d'un événement dans la séquence de données et une donnée relative à la présence ou l'absence d'une irrégularité dans la séquence de données (telle qu'indiquée par l'utilisateur).

L'information de confirmation peut ainsi être, par exemple : [0, 0] si aucun événement n'est présent et aucune irrégularité n'est présente; [0, 1] si aucun événement n'est présent mais si une irrégularité est présente ; [1, 0] si un événement est présent mais aucune irrégularité n'est présente ; et [1, 1] si un événement est présent et une irrégularité est présente.

La donnée dérivée 224' peut par exemple comprendre deux variables binaires : une première variable binaire relative à la présence d'un événement et une deuxième variable relative à la présence d'une irrégularité. La première variable vaut 1 si les informations d'identification et de confirmation relatives à un événement concordent et 0 sinon. La deuxième variable vaut 1 si les informations d'identification et de confirmation relatives à une irrégularité concordent et 0 sinon. La donnée dérivée 224' peut ainsi être définie comme suit, et peut correspondre à la récompense fournie au modèle d'apprentissage du module 222'b :

| Information d'identification | Information de confirmation | Donnée dérivée |
|---|---|---|
| [0 ; 0] | [0 ; 0] | [1 ; 1] |
| | [0 ; 1] | [1 ; 0] |
| | [1 ; 0] | [0 ; 1] |
| | [1 ; 1] | [0 ; 0] |
| [0 ; 1] | [0 ; 0] | [1 ; 0] |
| | [0 ; 1] | [1 ; 1] |
| | [1 ; 0] | [0 ; 0] |
| | [1 ; 1] | [0 ; 1] |
| [1 ; 0] | [0 ; 0] | [0 ; 1] |
| | [0 ; 1] | [0 ; 0] |
| | [1 ; 0] | [1 ; 1] |
| | [1 ; 1] | [1 ; 0] |
| [1 ; 1] | [0 ; 0] | [0 ; 0] |
| | [0 ; 1] | [0 ; 1] |
| | [1 ; 0] | [1 ; 0] |
| | [1 ; 1] | [1 ; 1] |

Le module 222a peut être le même pour les deux modes de réalisation. En revanche, le module 222'b reçoit en entrée la nouvelle donnée dérivée 224' et utilise cette nouvelle donnée dérivée 224' et l'information d'identification pour apprendre selon un mécanisme d'apprentissage, par exemple un mécanisme d'apprentissage par renforcement.

La distinction faite entre les deux types d'anomalie possibles permet plusieurs options pour l'entraînement du module 222'b : il peut être décidé que la nouvelle donnée dérivée 224' est utilisée pour entraîner le module 222'b dès lors qu'une anomalie est identifiée (même s'il s'agit d'une irrégularité), ou que la nouvelle donnée dérivée 224' n'est utilisée pour entraîner le module 222'b que lorsqu'un événement est identifié (mais pas une anomalie). Selon cette dernière option, le module 222'b n'apprend que lorsque la qualité des données est correcte.

Le système de surveillance représenté à la Figure 3 comprend en outre un module de déclenchement 226 qui peut être configuré pour émettre une alerte vers l'interface utilisateur 230 lorsqu'une anomalie est détectée par le module de détection 222'. Dans un mode de réalisation, l'information de confirmation n'est générée que lorsqu'une alerte a été émise. En d'autres termes, l'utilisateur 240 n'intervient que pour confirmer ou infirmer la présence d'une anomalie, et si l'anomalie est une irrégularité, l'utilisateur 240 peut en outre prendre les actions nécessaires. Ainsi, l'utilisateur 240 est moins sollicité (ce qui est particulièrement avantageux pour les applications où les anomalies sont rares).

Il est entendu qu'un tel module de déclenchement peut aussi être utilisé dans le cadre du système de surveillance de la Figure 2. Toutefois, dans le système de surveillance de la Figure 2, l'utilisateur 240 ne sait pas quel est le type d'anomalie détectée.

La Figure 4 représente un procédé de surveillance selon un ou plusieurs modes de réalisation de l'invention. Le procédé de surveillance de la Figure 4 est typiquement mis en oeuvre par le module de détection 220, 220'.

Lors d'une étape 410, une séquence temporelle de données relative à un système, appelé « système analysé » ci-dessus, est reçue.

Lors d'une étape 420, cette séquence temporelle de données est analysée pour y identifier une éventuelle anomalie. Pendant cette étape 420, il est déterminé si une anomalie est présente ou si aucune anomalie n'est présente dans la séquence temporelle de données reçue à l'étape 410. Comme mentionné ci-avant, il est conclu à une absence d'anomalie lorsqu'il n'est déterminé ni événement particulier, ni irrégularité intrinsèque aux données dans la séquence temporelle de données. Par contraposée, il est conclu à une présence d'anomalie si un événement particulier est identifié ou si une irrégularité est identifiée.

L'étape 420 est classiquement mise en oeuvre à l'aide d'un modèle d'apprentissage automatique préalablement entraîné pour identifier, dans une séquence temporelle de données, une présence ou une absence d'anomalie dans ladite séquence temporelle de données.

Lors d'une étape 430, il est vérifié si une anomalie a été identifiée ou non dans la séquence temporelle de données et si une anomalie a été identifiée, une étape 440 est mise en oeuvre, pendant laquelle une information d'identification relative à ladite anomalie identifiée est générée, comme détaillé ci-avant en référence aux Figures 2 et 3.

Il est noté que, dans certains modes de réalisation, une information d'identification peut être mise en oeuvre également lorsqu'aucune anomalie a été identifiée. Dans de tels modes de réalisation, l'information d'identification peut être par exemple mise à une valeur de référence correspondant à une absence d'identification d'une anomalie.

Lors d'une étape 450, la séquence temporelle de données est envoyée vers une interface utilisateur (élément 230 des Figures 2 et 3). Si une anomalie a été identifiée à l'étape 420, l'étape 450 comprend également l'émission, vers l'interface utilisateur, de l'information d'identification générée à l'étape 440.

Dans certains modes de réalisation, la séquence temporelle des données n'est envoyée que lorsque l'information d'identification a été générée à l'étape 440, i.e. quand une anomalie a été identifiée à l'étape 420.

Consécutivement à l'étape 440 (et éventuellement 450), une information de confirmation relative à la présence ou non d'une anomalie dans la séquence temporelle de données est reçue via l'interface utilisateur lors d'une étape 460, comme détaillé ci-avant en référence aux Figures 2 et 3.

Dans certains modes de réalisation, cette information de confirmation n'est reçue que lorsque l'information d'identification a été générée à l'étape 440, i.e. quand une anomalie a été identifiée à l'étape 420.

Cette information de confirmation est ensuite utilisée lors d'une étape 470 pour entraîner le modèle d'apprentissage automatique via un mécanisme d'apprentissage, par exemple un mécanisme d'apprentissage par renforcement.

Par exemple, comme détaillé ci-avant, une donnée 224, 224' dérivée de l'information de confirmation reçue à l'étape 460 peut être utilisée comme récompense du mécanisme d'apprentissage par renforcement. En particulier, cette donnée 224, 224' dérivée peut être déterminée à partir de l'information de confirmation et de l'information d'identification, lorsque cette dernière est disponible.

Lorsqu'aucune information d'identification n'est disponible (par exemple dans les modes de réalisation où l'information d'identification n'est générée que si une anomalie a été identifiée, et qu'aucune anomalie n'a été identifiée à l'étape 420), la donnée 224, 224' peut être déterminée à partir de l'information de confirmation et d'une ou plusieurs valeurs de référence associée à une non-identification d'une anomalie lors de l'étape 420. Par exemple, dans l'exemple décrit en référence à la Figure 2, en supposant que l'information de confirmation est une variable binaire qui vaut 1 si une anomalie est présente et 0 sinon : si aucune anomalie n'a été détectée à l'étape 420 et que l'information de confirmation reçue vaut 1, l'information de confirmation peut être comparée à une valeur de référence fixée à 0 (puisqu'aucune information d'identification n'a été générée). La récompense associée au modèle d'apprentissage du module 222b, 222'b peut ainsi être fonction :

- de l'information de confirmation reçue à l'étape 460 ; et

- de l'information d'identification si elle a été générée à l'étape 440, et de la valeur de référence sinon.

Dans les modes de réalisation où les informations d'identification et de confirmation comprennent une donnée relative à la présence ou l'absence d'un événement particulier et une donnée relative à la présence ou l'absence d'une irrégularité, l'information de confirmation peut être utilisée pour entraîner le modèle d'apprentissage automatique uniquement si la donnée de confirmation indique qu'un événement est effectivement présent dans la séquence temporelle de données.

Les étapes 410 à 470 peuvent bien entendu être mises en oeuvre de manière itérative, de sorte à surveiller le système analysé « en continu », séquence par séquence.

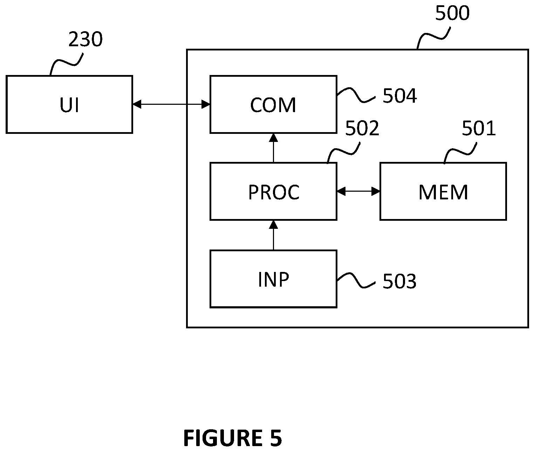

La Figure 5 représente un exemple d'un dispositif de surveillance selon un ou plusieurs modes de réalisation de l'invention.

Dans ces modes de réalisation, le dispositif de surveillance comporte un ordinateur 500, comprenant une mémoire 501 pour stocker des instructions permettant la mise en oeuvre du procédé et des données temporaires pour réaliser différentes étapes des procédés décrits précédemment. L'ordinateur 500 peut notamment assurer les fonctions du module de détection 220, 220' des Figures 2 et 3.

L'ordinateur 500 comporte en outre un circuit 502. Ce circuit peut être, par exemple un processeur apte à interpréter des instructions sous la forme de programme informatique, une carte électronique dont les étapes du procédé de l'invention sont décrites dans le silicium, ou encore une puce électronique programmable comme une puce FPGA (pour « Field-Programmable Gate Array » en anglais).

L'ordinateur 500 comporte une interface d'entrée 503 pour la réception de la séquence temporelle de données, et une interface de communication 504 pour communiquer avec une interface utilisateur (qui peut ou non faire partie du dispositif de surveillance), et notamment pour envoyer vers l'interface utilisateur 230 la séquence temporelle de données et l'éventuelle information d'identification et pour recevoir de l'interface utilisateur 230 l'information de confirmation.

Par ailleurs, le schéma fonctionnel présenté sur la Figure 4 est un exemple typique d'un programme dont certaines instructions peuvent être réalisées auprès du dispositif décrit. À ce titre, la Figure 4 peut correspondre à l'organigramme de l'algorithme général d'un programme informatique au sens de l'invention.

Bien entendu, la présente invention ne se limite pas aux formes de réalisation décrites ci-avant à titre d'exemples. Elle s'étend à d'autres variantes.

## Revendications

1. Procédé, mis en oeuvre par ordinateur, de surveillance d'un système pour détecter une présence d'un événement dans une séquence temporelle de données représentative d'une évolution temporelle du système comprenant :

   - recevoir (410) la séquence temporelle de données ;
   - déterminer (420) une présence ou une absence d'une anomalie dans ladite séquence temporelle de données, une absence d'une anomalie correspondant à une absence d'un événement particulier survenant dans le système et à une absence d'une irrégularité intrinsèque à la séquence temporelle de données, ladite détermination utilisant un modèle d'apprentissage automatique entraîné pour identifier une anomalie dans une séquence temporelle de données, ladite détermination comprenant :

     ◦ identifier si un événement particulier survenant dans le système est présent ou non dans la séquence temporelle de données ; et
     ◦ identifier si une irrégularité intrinsèque à la séquence temporelle de données est présente ou non dans la séquence temporelle de données ;

   - si la présence d'une anomalie a été déterminée (430), générer une information d'identification relative à ladite anomalie (440) comprenant :

     ◦ une donnée relative à une identification d'une présence ou non d'un événement particulier dans la séquence temporelle de données ; et
     ◦ une donnée relative à une identification d'une présence ou non d'une irrégularité intrinsèque à la séquence temporelle de données ;

   - envoyer (450) à une interface utilisateur ladite séquence temporelle de données et, si la présence d'une anomalie a été détectée, ladite information d'identification relative à ladite anomalie ;
   - consécutivement audit envoi, recevoir (460), via l'interface utilisateur, une information de confirmation relative à la présence ou non d'une anomalie dans la séquence temporelle de données, l'information de confirmation comprenant :

     ◦ une donnée relative à une présence ou une absence d'un événement particulier dans la séquence temporelle de données ; et
     ◦ une donnée relative à une présence ou une absence d'une irrégularité intrinsèque à la séquence temporelle de données ;

   - utiliser ladite information de confirmation et, si la présence d'une anomalie a été déterminée, l'information d'identification, pour entraîner (470) le modèle d'apprentissage automatique via un mécanisme d'apprentissage.

2. Procédé selon la revendication 1, dans lequel le mécanisme d'apprentissage comprend un mécanisme d'apprentissage par renforcement, dans lequel une récompense associée au mécanisme d'apprentissage par renforcement est fonction de l'information de confirmation et, si la présence d'une anomalie a été déterminée, de l'information d'identification.

3. Procédé selon la revendication 1 ou 2, dans lequel l'information d'identification relative à ladite anomalie comprend une donnée temporelle ou une donnée spatiale dans la séquence temporelle de données.

4. Procédé selon l'une des revendications précédentes, dans lequel l'événement particulier appartient à un ensemble d'événements, ledit ensemble d'événements étant déterminé par le mécanisme d'apprentissage.

5. Procédé selon l'une des revendications précédentes, dans lequel l'envoi (450) à l'interface utilisateur de ladite séquence temporelle de données est mis en oeuvre uniquement si la présence d'une anomalie a été déterminée.

6. Procédé selon l'une des revendications précédentes, dans lequel l'information de confirmation comprend en outre une donnée comportementale d'un utilisateur.

7. Procédé selon l'une des revendications précédentes, dans lequel le système est une scène et dans lequel la séquence temporelle de données comprend au moins une séquence temporelle d'images d'au moins une partie de la scène.

8. Dispositif (220, 220') de surveillance d'un système pour détecter une présence d'un événement dans une séquence temporelle de données représentative d'une évolution temporelle du système, comprenant :

- une interface d'entrée configurée (503) pour recevoir (410) la séquence temporelle de données ;
- un circuit de calcul (502) configuré pour :

○déterminer (420) une présence ou une absence d'une anomalie dans ladite séquence temporelle de données, une absence d'une anomalie correspondant à une absence d'un événement particulier survenant dans le système et à une absence d'une irrégularité intrinsèque à la séquence temporelle de données, ladite détermination utilisant un modèle d'apprentissage automatique entraîné pour identifier une anomalie dans une séquence temporelle de données, ladite détermination comprenant :

• identifier si un événement particulier survenant dans le système est présent ou non dans la séquence temporelle de données ; et
• identifier si une irrégularité intrinsèque à la séquence temporelle de données est présente ou non dans la séquence temporelle de données ;

○si la présence d'une anomalie a été déterminée (430), générer (440) une information d'identification relative à ladite anomalie comprenant :

• une donnée relative à une identification d'une présence ou non d'un événement particulier dans la séquence temporelle de données ; et
• une donnée relative à une identification d'une présence ou non d'une irrégularité intrinsèque à la séquence temporelle de données ;

- une interface de communication (504) configurée pour :

○envoyer (450) à une interface utilisateur ladite séquence temporelle de données et, si la présence d'une anomalie a été détectée, ladite information d'identification relative à ladite anomalie ;
○consécutivement audit envoi, recevoir (460), via l'interface utilisateur, une information de confirmation relative à la présence ou non d'une anomalie dans la séquence temporelle de données, l'information de confirmation comprenant :

• une donnée relative à une présence ou une absence d'un événement particulier dans la séquence temporelle de données ; et
• une donnée relative à une présence ou une absence d'une irrégularité intrinsèque à la séquence temporelle de données ;

dans lequel le circuit de calcul (502) est en outre configuré pour utiliser ladite information de confirmation et, si la présence d'une anomalie a été déterminée, l'information d'identification, pour entraîner (470) le modèle d'apprentissage automatique via un mécanisme d'apprentissage.

9. Produit programme informatique comportant des instructions pour mettre en oeuvre le procédé selon l'une des revendications 1 à 7 lorsque ce programme est exécuté par un processeur.

110

DAT → 120 DSS → 130 UI → 140

**FIGURE 1**

210

DAT

220

222

222a

210

240

EXT → PRED → UI 230

222b

FB

224

**FIGURE 2**

**FIGURE 3**

410 REC_SEQ

420 DET_ANOM

430 ANOM? → 440 GEN_IId

450 SEND_SEQ

460 REC_IConf

470 LEARN_MOD

**FIGURE 4**

**FIGURE 5**

# EP 4 567 680 A1

Europäisches Patentamt
European Patent Office
Office européen des brevets

## RAPPORT DE RECHERCHE EUROPEENNE

Numéro de la demande

EP 24 21 6025

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2022/048779 A1 (LYTT LTD [GB]) 10 mars 2022 (2022-03-10) * alinéa [0001] - alinéa [0046]; figure 1 * ----- | 1-9 | INV. G06N3/092 G06N20/00 |
| X | DJEACHANDRANE ABHISHEK ET AL: "QoE-based Situational Awareness-Centric Decision Support for Network Video Surveillance", ICC 2022 - IEEE INTERNATIONAL CONFERENCE ON COMMUNICATIONS, IEEE, 16 mai 2022 (2022-05-16), pages 335-340, XP034167370, DOI: 10.1109/ICC45855.2022.9838601 * le document en entier * ----- | 1-6,8,9 | |

DOMAINES TECHNIQUES RECHERCHES (IPC)

G06F
G06N

Le présent rapport a été établi pour toutes les revendications

| Lieu de la recherche | Date d'achèvement de la recherche | Examinateur |
|---|---|---|
| La Haye | 24 mars 2025 | Nourestani, S |

EPO FORM 1503 03.82 (P04C02)

19

**EP 4 567 680 A1**

## ANNEXE AU RAPPORT DE RECHERCHE EUROPEENNE
## RELATIF A LA DEMANDE DE BREVET EUROPEEN NO.

EP 24 21 6025

24-03-2025

| Document brevet cité au rapport de recherche | Date de publication | Membre(s) de la famille de brevet(s) | Date de publication |
|---|---|---|---|
| WO 2022048779 A1 | 10-03-2022 | EP 4208824 A1 | 12-07-2023 |
| | | US 2024028019 A1 | 25-01-2024 |
| | | WO 2022048779 A1 | 10-03-2022 |

EPO FORM P0460